# EUROPÄISCHE PATENTANMELDUNG

(11) **EP 1 235 330 A1**
(43) Veröffentlichungstag der Anmeldung: **28.08.2002**
(21) Anmeldenummer: 02360059.6
(22) Anmeldetag: 11.02.2002
(51) Int. Cl.: H02K 7/116, F16H 1/16, F16H 55/06, E05F 15/12

(54) **Elektromotorischer Antrieb und Türautomatik mit Schneckenradgetriebe**

(30) Priorität: 26.02.2001 DE 10109278
(71) Anmelder: ALCATEL, 75008 Paris (FR)
(72) Erfinder: Tascher, Gerhard, 79848 Bonndorf (DE); Pfendler, Klaus, 79848 Bonndorf (DE)
(74) Vertreter: Brose, Gerhard

(57) **Zusammenfassung**

Die Erfindung betrifft einen elektromotorischen Antrieb mit einem Getriebe, dessen Übersetzungsverhältnis im Bereich zwischen 80:1 und 220:1 liegt sowie eine Türautomatik, insbesondere für Schwingtüren, mit einem derartigen Antrieb. Ein besonders geräuscharmer und kompakter Antrieb, der bei der Verwendung in einer Türautomatik sowohl für rechtsanschlagende als auch für linksanschlagende Türen geeignet ist, ist dadurch gekennzeichnet, dass das Getriebe zwei Stufen aufweist, wobei die erste Stufe als Schneckengetriebestufe (2) und die zweite Stufe als Stirnradgetriebestufe (3) ausgebildet sind.

## Beschreibung

Die Erfindung betrifft einen elektromotorischen Antrieb gemäß dem Oberbegriff des Anspruchs 1 sowie eine Türautomatik mit einem derartigen Antrieb gemäß dem Oberbegriff des Anspruchs 3.

Elektromotorische Antriebe mit sehr hoher Drehzahlreduzierung zwischen der Motorwelle und der Abtriebswelle werden im allgemeinen mittels mehrstufiger Getriebe realisiert. Bekannt und gebräuchlich sind vor allem Planeten-Kegelradgetriebekombinationen, Kegelrad-Stirnradgetriebekombinationen oder mehrstufige Stirnradgetriebe. Diese Reduziergetriebe sind mit mindestens drei Stufen ausgestattet. Vielstufige Antriebe sind jedoch relativ teuer und voluminös. Außerdem sind störende Geräusche auf Grund der diversen Verzahnungsteile kaum zu vermeiden.

Der Erfindung liegt die Aufgabe zu Grunde einen elektromotorischen Antrieb der gattungsbildenden Art anzugeben, der sich durch kleinere Bauform und leiseren Lauf auszeichnet.

Erfindungsgemäß wird die Aufgabe durch die kennzeichnenden Merkmale des Anspruchs 1 gelöst. Durch die Zweistufigkeit ergibt sich eine Verringerung der Baugröße, der Kosten und der Geräuschentwicklung. Da kämmende Verzahnungen nur noch zwischen Motorwelle und Schneckenrad sowie zwischen Schneckenradwelle und Stirnrad vorgesehen sind, sind Geräuschpegel und Geräuschfrequenzen einfacher im Hinblick auf leisen und frequenzmäßig angenehmen Lauf beeinflussbar als beispielsweise bei dreistufigen Kegelrad-Stirnradgetrieben, bei denen drei Verzahnungen für Unruhe sorgen. Kegelrad-Getriebestufen sind außerdem nur für eine maximale Untersetzung von 6:1 geeignet. Um ein Gesamt-Übersetzungsverhältnis von beispielsweise 120:1 zu erreichen, müsste folglich noch um 20:1 untersetzt werden, so dass herkömmliche Antriebe für ein derart hohes Gesamt-Übersetzungsverhältnis mindestens drei Stufen benötigen. Eine Reduzierung auf zwei Stufen ist nur möglich, da die Schneckengetriebestufe ein Übersetzungsverhältnis von bis zu 25:1 erreichen kann. Bei noch größeren Übersetzungsverhältnis wird der Wirkungsgrad derart klein, dass das Getriebe selbsthemmend und damit nicht mehr rücktreibbar wird.

Gemäß Anspruch 2 ist die Schneckengetriebestufe vorzugsweise mit einem Kunststoff-Schneckenrad ausgestattet. Es hat sich gezeigt, dass der Wirkungsgrad eines Kunststoff-Schneckenrades viel besser als der eines herkömmlichen Metall-Schneckenrades ist. Letztlich ergibt sich dadurch die Möglichkeit, Schneckenradgetriebestufen mit sehr hohem Übersetzungsverhältnis herzustellen, ohne dadurch den Wirkungsgrad unakzeptabel zu reduzieren. Auch die Selbsthemmungsneigung hält sich bei dem beanspruchten Schneckenrad-Stirnradgetriebe in Grenzen, d.h. dieses Getriebe lässt sich mit wenig Kraftaufwand in die Gegenrichtung zurückstellen.

Diese Eigenschaften sind insbesondere bei einer in Anspruch 3 charakterisierten Türautomatik von Vorteil. Dabei dient der Antrieb zum Öffnen der Tür, während das Federrückstellelement die Tür in eine Ausgangsposition schwenkt. Die Federkraft kann bei Bedarf leicht eingestellt werden. Darüber hinaus kann die Tür durch entsprechende Federkraft aus Sicherheitsgründen, insbesondere bei Feuerschutztüren oder bei Stromausfall, in eine Neutralposition geschwenkt werden.

Bei Türantrieben besteht das spezielle Problem, dass die Bauform herkömmlicher Türautomatik bei linksanschlagenden und rechtsanschlagenden Türen unterschiedlich sein muss.

Dieses Problem wird durch die kennzeichnenden Merkmale des Anspruchs 3 beseitigt. Der zweistufige Schnecken-Stirnradantrieb gestattet einen symmetrischen Aufbau mittig zum Getriebegehäuse, wodurch der Antrieb sowohl für rechtsanschlagenden als auch für linksanschlagende Türen geeignet ist.

Gemäß Anspruch 4 wirkt das Federrückstellelement bevorzugt auf die Schneckenradwelle der Schneckengetriebestufe. Bei bekannten Türantrieben ist die Feder, welche die Tür in die Neutralposition oder die Ausgangsposition schwenkt, an der Abtriebswelle angebracht. Dazu sind erhebliche Federdrehmomente, verbunden mit großer und kostspieliger Bauweise notwendig. Durch die Anbringung der Feder an der Schneckenradwelle ergibt sich die Möglichkeit, ein geringeres Federdrehmoment vorzusehen, sodass letztlich die Baugröße und Kosten reduziert werden.

Insgesamt ergeben sich für die beanspruchte Türautomatik mit Schnecken-Stirnradgetriebe gegenüber herkömmlichen Bauformen folgende Vorteile:
- Geräuschreduzierung,
- Verzahnungsteileredzierung,
- geringere Baugröße und
- einfache Änderung der Übersetzung durch Austausch der Schneckengetriebestufe.

Nachfragend wird die Erfindung anhand eines figürlich dargestellten Ausführungsbeispiels näher erläutert.

Es zeigen:
- Figur 1: einen ersten Querschnitt durch einen elektromotorischen Antrieb und
- Figur 2: einen zweiten Querschnitt durch den Antrieb gemäß Figur 1.

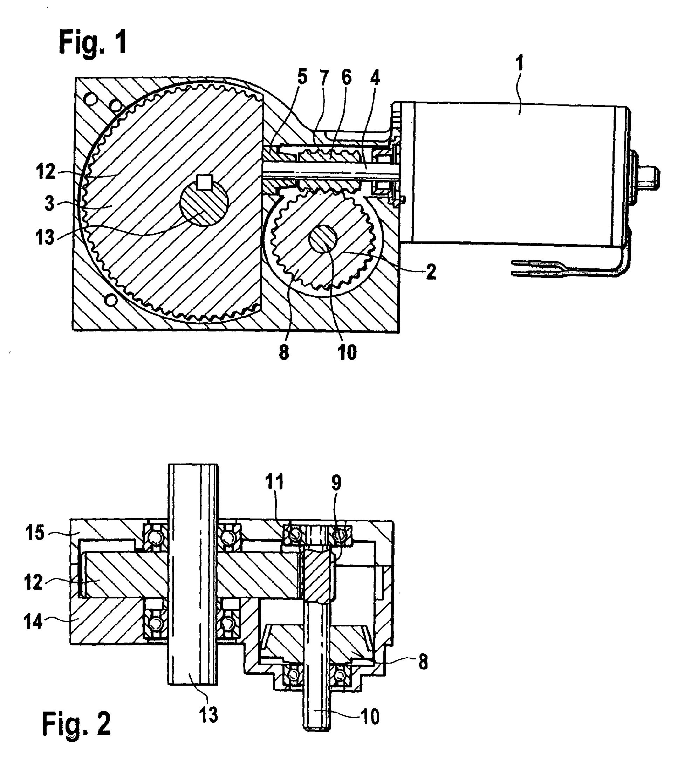

Der dargestellte Antrieb besteht im wesentlichen aus einem Antriebsmotor 1, einer Schneckengetriebestufe 2 und einer Stirnradgetriebestufe 3. Die Motorwelle 4, die mit einem Gleitlager 5 zusammenwirkt, trägt eine Schnecke 6 mit schräger Verzahnung 7. Die Verzahnung 7 wirkt auf ein Schneckenrad 8, das sich gegenüber der Motorwelle 4 mit einem Untersetzungsverhältnis von beispielsweise 10:1, 15:1 oder 24,5:1 dreht. Ein derart großes Untersetzungsverhältnis ist bei einer Kunststoffausführung des Schneckenrades 8 möglich. Um die Drehzahl noch mal um einen Faktor von circa 10 zu senken, korrespondiert ein Ritzel 9 (Figur 2) auf der Schneckenradwelle 10 mit einer Schrägverzahnung 11 (Figur 2) eines Stirnrades 12. Die Stirnradwelle fungiert als Abtriebswelle 13 des elektromotorischen Antriebes.

Figur 2 zeigt einen Schnitt durch den Getriebeteil des Antriebes, wobei ein Gehäuse 14 mit Deckel 15 ersichtlich ist, womit der kompakte Aufbau des zwischen achtzigfach und zweihundertfzwanzigfach untersetzenden Reduziergetriebes besonders deutlich wird.

## Patentansprüche

1. Elektromotorischer Antrieb mit einem Getriebe, dessen Übersetzungsverhältnis mindestens 80:1 beträgt,
**dadurch gekennzeichnet, dass** das Getriebe zwei Stufen aufweist, wobei die erste Stufe als Schneckengetriebestufe (2) und die zweite Stufe als Stirnradgetriebestufe (3) ausgebildet sind.

2. Antrieb nach Anspruch 1, **dadurch gekennzeichnet, dass** die Schneckengetriebestufe (2) ein Kunststoff-Schneckenrad (8) aufweist.

3. Türautomatik, insbesondere für Schwingtüren, mit einem Antrieb nach einem der vorangehenden Ansprüche und einem Federrückstellelement, **dadurch gekennzeichnet, dass** der Antrieb eine für rechtsanschlagende und linksanschlagende Türen geeignete symmetrische Bauform aufweist.

4. Türautomatik nach Anspruch 3, **dadurch gekennzeichnet, dass** das Federrückstellelement die Schneckenradwelle (10) der Schneckengetriebestufe (2) beaufschlagt.
